# EUROPEAN PATENT APPLICATION

(11) **EP 4 790 668 A1**
(43) Date of publication of application: **12.08.2026**
(21) Application number: 23954843.1
(22) Date of filing: 06.10.2023
(51) Int. Cl.: G06V 40/10

(54) **TRAINING PROGRAM, TRAINING METHOD, AND TRAINING DEVICE**

(71) Applicant: FUJITSU LIMITED, Kawasaki-shi, Kanagawa 211-8588 (JP)
(72) Inventor: AOKI, Takahiro, Kawasaki-shi, Kanagawa 211-8588 (JP)
(74) Representative: Hoffmann Eitle
(86) International application number: PCT/JP2023/036622
(87) International publication number: WO 2025/074637

(57) **Abstract**

To generate a neural network that enables biometric authentication robust to posture variations of a biological body part.

A processing unit (12) converts a learning image (2-1), which is for machine learning of a neural network (1) configured to calculate authentication data for biometric authentication from an input biometric image, into three-dimensional data (3a) by using a first conversion expression based on internal parameters (13) of an imaging apparatus for capturing the biometric image; generates three-dimensional data (3b) by varying a posture of a biological body part (4) included in the three-dimensional data (3a); generates a learning image (2-1a) by converting the three-dimensional data (3b) by using a second conversion expression that performs inverse conversion of conversion performed by using the first conversion expression; and executes machine learning of the neural network (1) by using at least the learning image (2-1) and the learning image (2-1a).

## Description

### Technical Field

The embodiments discussed herein relate to a learning program, a learning method, and a learning apparatus.

### Background Art

In recent years, biometric authentication using various biological body parts has been utilized. For example, in fingerprint authentication, authentication is often performed by bringing a biological body part (a finger) into contact with a biometric sensor. On the other hand, in palm vein authentication and iris authentication, authentication is performed in a non-contact manner.

In addition, in biometric authentication processing, there are cases where a neural network generated by machine learning is utilized. For example, it has been considered to utilize a neural network in processing for calculating registration authentication data and matching authentication data from a captured biometric image.

As a related technique of biometric authentication, a biometric authentication system has been proposed in which a neural network serves as a local classifier for classifying a palm region as a region of interest. In addition, as a related technique of neural networks, a data labeling method has been proposed in which, in order to train a neural network that performs hand tracking, three-dimensional position coordinates of bone points are acquired based on depth images collected by a depth camera, and joint information of the bone points is labeled based on the three-dimensional position coordinates and two-dimensional position coordinates on the depth images.

### Citation List

### Patent Literature

PTL1: International Publication Pamphlet No. WO 2014/039732
PTL2: U.S. Patent Application Publication No. 2022/0366717

### Summary of Invention

### Technical Problem

In non-contact biometric authentication, there are cases where a posture of a biological body part with respect to a biometric sensor is not constant. Variations in the posture of the biological body part become a major factor causing authentication errors.

In one aspect, an object of the present invention is to provide a learning program, a learning method, and a learning apparatus capable of generating a neural network that enables biometric authentication robust to variations in the posture of a biological body part.

### Solution to Problem

In one aspect, there is provided a learning program that causes a computer to execute a process including converting a first learning image, which is for machine learning of a neural network configured to calculate authentication data for biometric authentication from an input biometric image, into first three-dimensional data by using a first conversion expression based on an internal parameter of an imaging apparatus for capturing the biometric image; generating second three-dimensional data by varying a posture of a biological body part included in the first three-dimensional data; generating a second learning image by converting the second three-dimensional data by using a second conversion expression that performs inverse conversion of conversion performed by using the first conversion expression; and executing machine learning of the neural network by using at least the first learning image and the second learning image.

In another aspect, there is provided a learning method in which a computer executes processing similar to the processing based on the above learning program.

Further, in another aspect, there is provided a learning apparatus that executes processing similar to the processing based on the above learning program.

### Advantageous Effects of Invention

In one aspect, a neural network that enables biometric authentication robust to variations in the posture of a biological body part is generated.

The above and other objects, features, and advantages of the present invention will become apparent from the following description taken in conjunction with the accompanying drawings, which illustrate preferred embodiments of the present invention by way of example.

### Brief Description of Drawings

[FIG. 1] FIG. 1 illustrates an example of a configuration and processing of a learning apparatus according to a first embodiment.
[FIG. 2] FIG. 2 illustrates an example of a configuration of a biometric authentication system according to a second embodiment.
[FIG. 3] FIG. 3 illustrates an example of a hardware configuration of a learning apparatus.
[FIG. 4] FIG. 4 illustrates a convolutional neural network (CNN) for explaining generation of authentication data.
[FIG. 5] FIG. 5 illustrates normalization processing of an input image.
[FIG. 6] FIG. 6 illustrates a procedure for generating an augmented image.
[FIG. 7] FIG. 7 illustrates an example of a configuration of processing functions included in the learning apparatus.
[FIG. 8] FIG. 8 illustrates an example of data included in a sensor dataset.
[FIG. 9] FIG. 9 is a flowchart illustrating an example of training processing.
[FIG. 10] FIG. 10 is a flowchart illustrating an example of training data augmentation processing.
[FIG. 11] FIG. 11 illustrates an example of a configuration of processing functions included in an authentication apparatus.
[FIG. 12] FIG. 12 is a flowchart illustrating an example of registration processing.
[FIG. 13] FIG. 13 is a flowchart illustrating an example of matching processing.
[FIG. 14] FIG. 14 illustrates probabilities of selecting discrete values for an amount of translation in a z-axis direction.
[FIG. 15] FIG. 15 illustrates an example of a configuration of an authentication data generating unit included in an authentication apparatus according to a third embodiment.
[FIG. 16] FIG. 16 illustrates an example of a configuration of processing functions of a learning apparatus according to the third embodiment.
[FIG. 17] FIG. 17 is a flowchart illustrating an example of training processing.
[FIG. 18] FIG. 18 is a flowchart illustrating an example of training data augmentation processing.
[FIG. 19] FIG. 19 illustrates an example of a configuration of processing functions included in the authentication apparatus according to the third embodiment.
[FIG. 20] FIG. 20 is a flowchart illustrating an example of registration processing.
[FIG. 21] FIG. 21 illustrates an example of a configuration of a biometric authentication system according to a fourth embodiment.
[FIG. 22] FIG. 22 illustrates an example of a configuration of processing functions included in a learning apparatus.
[FIG. 23] FIG. 23 illustrates an example of a configuration of processing functions included in an authentication server and authentication clients.

### Description of Embodiments

Hereinafter, embodiments of the present invention will be described below with reference to the drawings.

### First Embodiment

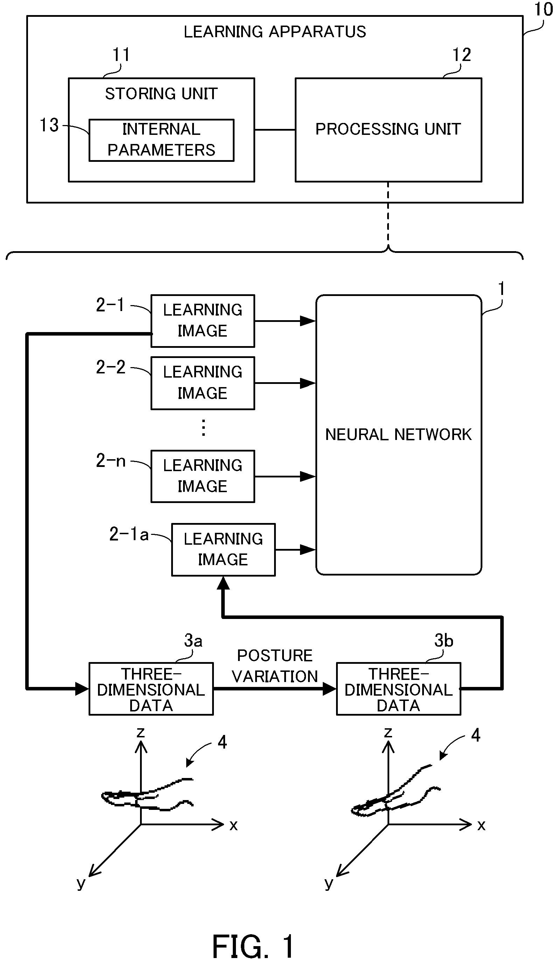

FIG. 1 illustrates an example of a configuration and processing of a learning apparatus according to a first embodiment. A learning apparatus 10 illustrated in FIG. 1 is an apparatus that generates, by machine learning, a neural network 1 which is used at the time of biometric authentication processing. As the biometric authentication, non-contact biometric authentication is applied in which biological information is read in a state where a biological body part does not contact a biometric sensor, such as palm vein authentication.

The learning apparatus 10 includes a storing unit 11 and a processing unit 12. The storing unit 11 is a storage area secured in a storage device included in the learning apparatus 10. Internal parameters 13 of a biometric sensor are stored in the storing unit 11. The internal parameters 13 include, for example, information such as a focal length and image center coordinates. The processing unit 12 is, for example, a processor included in the learning apparatus 10. The following processing performed by the processing unit 12 is implemented, for example, by the processor executing a program.

When a biometric image is input, the neural network 1 calculates authentication data for biometric authentication (registration data and matching data). In addition, training of the neural network 1 is executed using a plurality of learning images prepared in advance. The plurality of learning images is biometric images obtained by capturing a biological body part. In the present embodiment, as an example, it is assumed that n learning images 2-1 to 2-n are prepared in advance. The learning images 2-1 to 2-n may be stored in the storing unit 11.

The processing unit 12 executes training data augmentation processing (augmentation) for increasing the number of learning images by selecting one or more learning images from the learning images 2-1 to 2-n. Here, as an example, it is assumed that the learning image 2-1 is selected. The processing unit 12 converts the selected learning image 2-1 into three-dimensional data 3a by a first conversion formula based on the internal parameters 13.

Next, the processing unit 12 converts the three-dimensional data 3a into three-dimensional data 3b by varying a posture of a biological body part 4 included in the three-dimensional data 3a. In this processing, a three-dimensional posture variation is added to the biological body part 4. In the example of FIG. 1, the biological body part 4 is a palm, and the posture of the biological body part 4 is varied so that a state in which a surface of the palm is substantially parallel to an x-y plane in a three-dimensional coordinate system becomes a state in which an inclination occurs with respect to the x-y plane.

Next, the processing unit 12 generates a learning image 2-1a by converting the three-dimensional data 3b into two-dimensional data by a second conversion formula that performs inverse conversion of the first conversion formula. In this manner, the learning image 2-1a, in which the biological body part 4 is imaged in a state where the posture is varied, is generated from the learning image 2-1.

During training of the neural network 1, the processing unit 12 executes machine learning of the neural network 1 by using at least the learning image 2-1 and the learning image 2-1a. In practice, machine learning of the neural network 1 is executed using the learning images 2-1 to 2-n together with a plurality of newly generated learning images such as the learning image 2-1a generated from the plurality of original learning images.

As a result, compared with a case where training is performed using only the learning images 2-1 to 2-n, the neural network 1 capable of calculating authentication data that is robust to variations in the posture of the biological body part 4 is generated. In particular, in the above processing, since it becomes possible to vary the biological body part 4 in three-dimensional space in a state where the biological body part 4 is converted into three-dimensional data, learning images that accurately reproduce posture variations of the biological body part 4 that may actually occur are additionally generated. Then, by training the neural network 1 using the additionally generated learning images together with the original learning images, the neural network 1 capable of reliably calculating authentication data that is robust to variations in the posture of the biological body part 4 is generated. By using such a neural network 1 for authentication processing, highly accurate authentication processing robust to variations in the posture of the biological body part 4 is executed.

Here, as the above second conversion formula, a camera matrix that converts three-dimensional coordinates in a three-dimensional space into two-dimensional coordinates may be used. In non-contact biometric authentication, there are cases where an appropriate distance exists between a biometric sensor and a biological body part at the time when a biometric image is captured. In addition, there are many cases where the biometric sensor and the biological body part are substantially parallel at the time when the biometric image is captured. In such cases, among parameters of the camera matrix, a parameter indicating a distance of the biological body part in a z-axis direction is set to a fixed value indicating the appropriate distance, and a rotation parameter is set to zero. As a result, by inverse conversion using the camera matrix, the learning image is converted into three-dimensional data, and by using the camera matrix, the three-dimensional data after posture variation is converted into two-dimensional data.

### Second Embodiment

Next, a system in which vein authentication using palm veins is executed as an example of biometric authentication will be described.

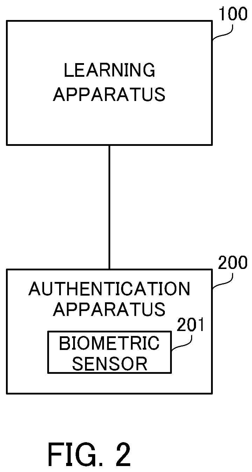

FIG. 2 illustrates an example of a configuration of a biometric authentication system according to a second embodiment. As illustrated in FIG. 2, the biometric authentication system includes a learning apparatus 100 and an authentication apparatus 200.

The authentication apparatus 200 includes a biometric sensor 201 for acquiring biometric information of a user. In the present embodiment, information of palm veins is used as the biometric information. In this case, the biometric sensor 201 includes, for example, a light-emitting unit that emits near-infrared light onto a palm, and an imaging unit that captures a biometric image by receiving reflected near-infrared light from the palm.

The authentication apparatus 200 generates authentication data used for authentication by performing image processing on a captured biometric image. The authentication apparatus 200 generates registration authentication data (registration data) from the biometric information of a user to be registered, and registers the generated registration data in a database. In addition, the authentication apparatus 200 generates matching authentication data (matching data) from the biometric information of a user to be authenticated, and outputs an authentication result by matching the generated matching data with the registration data registered in the database.

In the authentication apparatus 200, authentication data is generated by using a convolutional neural network (CNN). The learning apparatus 100 generates the above CNN by executing machine learning using biometric images for training (learning images) captured in advance.

By training the CNN, weight coefficients between nodes in the CNN are calculated, and a weight dataset including the calculated weight coefficients is generated. The generated weight dataset is delivered to the authentication apparatus 200, and the authentication apparatus 200 becomes capable of generating authentication data by setting the weight coefficients included in the weight dataset in the CNN.

The learning apparatus 100 is connected to the authentication apparatus 200, for example, via a network. In this case, the learning apparatus 100 delivers the generated weight dataset to the authentication apparatus 200 via the network. Alternatively, the generated weight dataset may be delivered to the authentication apparatus 200 via a portable recording medium.

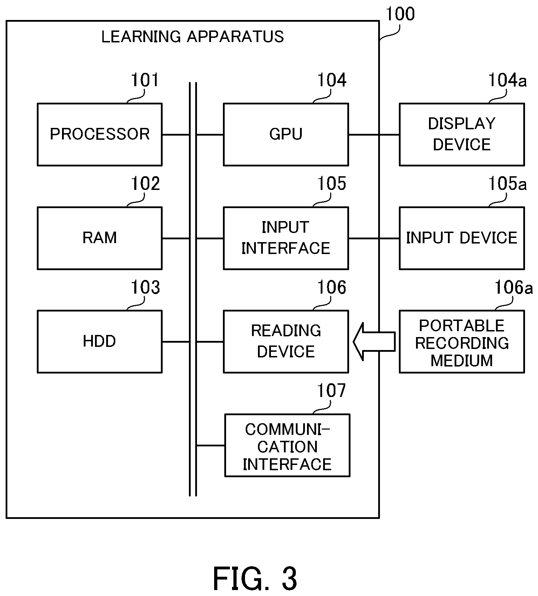

FIG. 3 illustrates an example of a hardware configuration of the learning apparatus. The learning apparatus 100 is implemented, for example, as a computer such as that illustrated in FIG. 2. As illustrated in FIG. 2, the learning apparatus 100 includes a processor 101, a random access memory (RAM) 102, a hard disk drive (HDD) 103, a graphics processing unit (GPU) 104, an input interface 105, a reading device 106, and a communication interface 107.

The processor 101 integrally controls the entire learning apparatus 100. The processor 101 is, for example, a central processing unit (CPU), a micro processing unit (MPU), a digital signal processor (DSP), an application specific integrated circuit (ASIC), or a programmable logic device (PLD). The processor 101 may also be a combination of two or more of a CPU, an MPU, a DSP, an ASIC, and a PLD. The processor 101 is an example of the processing unit 12 illustrated in FIG. 1.

The RAM 102 is used as a main storage device of the learning apparatus 100. At least a part of an operating system (OS) program and an application program to be executed by the processor 101 is temporarily stored in the RAM 102. Various data needed for processing by the processor 101 are also stored in the RAM 102.

The HDD 103 is used as an auxiliary storage device of the learning apparatus 100. An OS program, application programs, and various data are stored in the HDD 103. As the auxiliary storage device, another type of nonvolatile storage device such as a solid state drive (SSD) may be used.

A display device 104a is connected to the GPU 104. The GPU 104 causes an image to be displayed on the display device 104a in accordance with an instruction from the processor 101. Examples of the display device 104a include a liquid crystal display and an organic electroluminescence (EL) display.

An input device 105a is connected to the input interface 105. The input interface 105 transmits a signal output from the input device 105a to the processor 101. Examples of the input device 105a include a keyboard and a pointing device. Examples of the pointing device include a mouse, a touch panel, a tablet, a touch pad, and a trackball.

A portable recording medium 106a is attachable to and detachable from the reading device 106. The reading device 106 reads data recorded on the portable recording medium 106a and transmits the data to the processor 101. Examples of the portable recording medium 106a include an optical disc and a semiconductor memory.

The communication interface 107 transmits and receives data to and from another apparatus such as the authentication apparatus 200 via a network.

By such a hardware configuration, processing functions of the learning apparatus 100 are implemented. The authentication apparatus 200 may also be implemented as a computer including a processor and a memory.

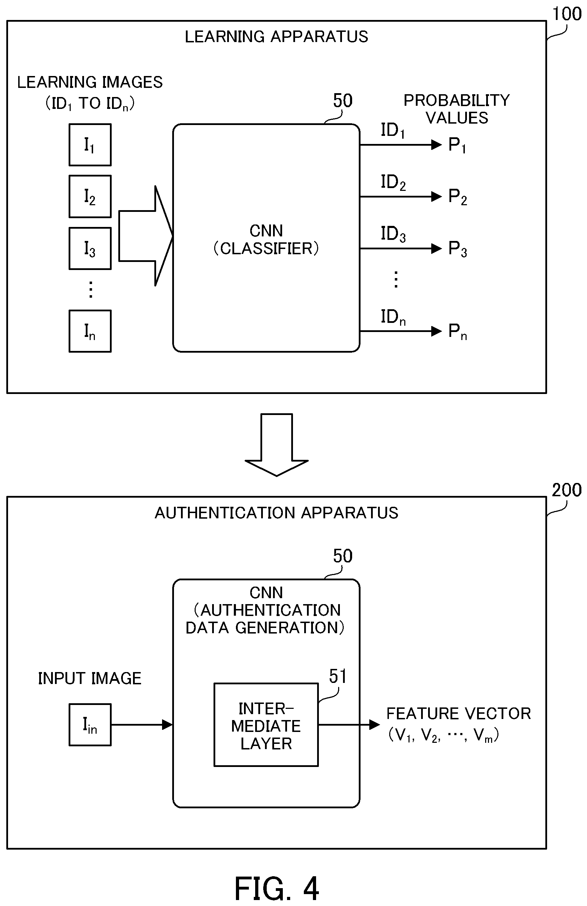

FIG. 4 illustrates a convolutional neural network (CNN) for explaining generation of authentication data. As described above, the authentication apparatus 200 generates authentication data by using a CNN 50. The CNN 50 is trained by the learning apparatus 100. The training of the CNN 50 is performed as follows.

In the learning apparatus 100, n learning images I₁ to Iₙ are prepared for training the CNN 50. The learning images I₁ to Iₙ are biometric images obtained by capturing palms of different persons, respectively. Identification information ID₁ to IDₙ for identifying the persons who are imaging targets is associated with the respective learning images I₁ to Iₙ. The learning apparatus 100 trains a classifier having a number of categories equal to n, whereby an input image is classified into the n persons corresponding to the learning images I₁ to Iₙ, by using the learning images I₁ to Iₙ as training data and ID₁ to IDₙ as ground truth data. As a result, the CNN 50 that calculates probability values P₁ to Pₙ corresponding to the respective ID₁ to IDₙ when an image is input is generated.

The authentication apparatus 200 generates authentication data by using the CNN 50 generated in this manner. As the authentication data, a feature vector composed of a plurality of features is calculated. The CNN 50 includes an input layer, a plurality of intermediate layers (hidden layers), and an output layer. When an input image Iᵢₙ from the biometric sensor 201 is input to the CNN 50, the CNN 50 outputs, from a predetermined intermediate layer 51, an m-dimensional feature vector (V₁, V₂, ···, Vₘ). The output feature vector (V₁, V₂, ···, Vₘ) becomes information indicating features of the input image Iᵢₙ.

The feature vector (V₁, V₂, ···, Vₘ) may be output from two or more predetermined intermediate layers. As numerical examples of n and m, n = 10,000 and m = 512 are applicable.

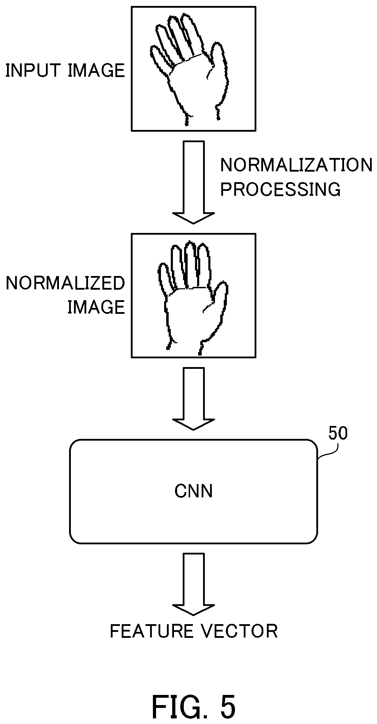

FIG. 5 illustrates normalization processing of an input image. In a biometric image used at the time of authentication, it is desirable that an authentication region (a palm in the present embodiment) be imaged in a fixed posture. However, in practice, a user does not always place the authentication region at a correct angle with respect to the biometric sensor 201. Therefore, captured biometric images often include posture variations of the authentication region. Such posture variations are a major cause of biometric authentication errors, and reducing posture variations is an important factor for improving authentication accuracy.

Accordingly, as illustrated in FIG. 5, the authentication apparatus 200 performs "normalization processing" on an input image obtained from the biometric sensor 201, in which a posture of a palm in the image is corrected to a proper posture. The authentication apparatus 200 then inputs a normalized image obtained by the normalization processing to the CNN 50. In the normalization processing, rotation and translation are performed so that the posture and position of the palm in the image become a predetermined state. For example, in rotation processing, contour lines of the palm are detected from the input image, a rotation angle is calculated based on an angle of a line extending substantially vertically among the detected contour lines, and the image is rotated by the calculated rotation angle.

By inputting the normalized image after such processing to the CNN 50, a feature vector for which authentication errors are unlikely to occur is calculated. However, even if such normalization processing is performed, the posture of the palm is not always corrected accurately. Therefore, the CNN 50 that processes the normalized image is also expected to exhibit robustness against posture variations.

For this reason, in the present embodiment, augmentation processing is performed on learning images used for training the CNN 50. In the augmentation processing, a new learning image (an augmented image) is generated by intentionally varying the posture of the palm in an original learning image, and the CNN 50 is trained using the augmented image together with the original learning image. For example, by using as a learning image an augmented image obtained by rotating the palm in the original learning image, the CNN 50 that is robust to rotation is generated.

As augmentation processing of learning images in a CNN for image processing, for example, the following two methods are conceivable. As a first method, there is a method of using affine transformation. In this method, two-dimensional coordinates of an image are transformed by calculation using a matrix that performs scaling, rotation, and translation. As a second method, there is a method of using homography transformation (projective transformation). In this method, four pairs of points before movement and after movement are selected from the image. Since the number of independent parameters in homography transformation is eight, a transformation matrix (a homography matrix) is uniquely determined by selecting four pairs of movement points, and the two-dimensional coordinates of the image are transformed by the determined matrix.

However, in each of the first and second methods, three-dimensional variations of a subject are expressed only in a pseudo three-dimensional manner. Therefore, even if augmentation processing is performed on a learning image in which a palm is imaged by either of the above methods, it is not possible to generate an augmented image that accurately expresses three-dimensional posture changes of a palm that actually occur. Accordingly, when the CNN 50 is trained using augmented images generated by the above methods, it is not always possible to generate the CNN 50 that enables high-performance authentication processing that is robust to posture variations of the palm.

Here, processing for converting three-dimensional coordinates (X_{w}, Y_{w}, Z_{w}) in a global coordinate system into two-dimensional coordinates (u, v) on an image is executed using the following Expression (1) with a camera matrix P. $s \left(\begin{matrix}u \\ v \\ 1\end{matrix}\right) = P \left(\begin{matrix}{X}_{w} \\ {Y}_{w} \\ {Z}_{w} \\ 1\end{matrix}\right) = \left(\begin{matrix}{f}_{x} & 0 & {c}_{x} \\ 0 & {f}_{y} & {c}_{y} \\ 0 & 0 & 1\end{matrix}\right) \left(\begin{matrix}{r}_{11} & {r}_{12} & {r}_{13} & {t}_{1} \\ {r}_{21} & {r}_{22} & {r}_{23} & {t}_{2} \\ {r}_{31} & {r}_{32} & {r}_{33} & {t}_{3}\end{matrix}\right) \left(\begin{matrix}{X}_{w} \\ {Y}_{w} \\ {Z}_{w} \\ 1\end{matrix}\right)$

In Expression (1), s is a variable indicating a magnification factor. The camera matrix P is expressed as a product of a 3×3 internal parameter matrix including fₓ, f_{y}, cₓ, and c_{y}, and a 3×4 external parameter matrix including r₁₁, r₁₂, ···, r₃₂, r₃₃, and t₁, t₂, and t₃.

The internal parameter matrix is a matrix that converts three-dimensional coordinates in a camera coordinate system into two-dimensional coordinates on an image. fₓ and f_{y} indicate focal lengths in an x-direction and a y-direction, respectively, and (cₓ, c_{y}) indicates image center coordinates. fₓ, f_{y}, cₓ, and c_{y} of the internal parameter matrix indicate internal parameters of the camera and are determined in advance according to specifications of an image sensor of the biometric sensor 201.

The external parameter matrix is a matrix that converts three-dimensional coordinates in the global coordinate system into three-dimensional coordinate system in the camera coordinate system. Among the external parameter matrix, a 3×3 matrix including r₁₁, r₁₂, ···, r₃₂, and r₃₃ is a rotation matrix indicating rotation, and a 3×1 matrix including t₁, t₂, and t₃ is a translation vector indicating translation.

In the present embodiment, by using such a camera matrix P, an augmented image including a palm to which three-dimensional posture variation is accurately applied is generated.

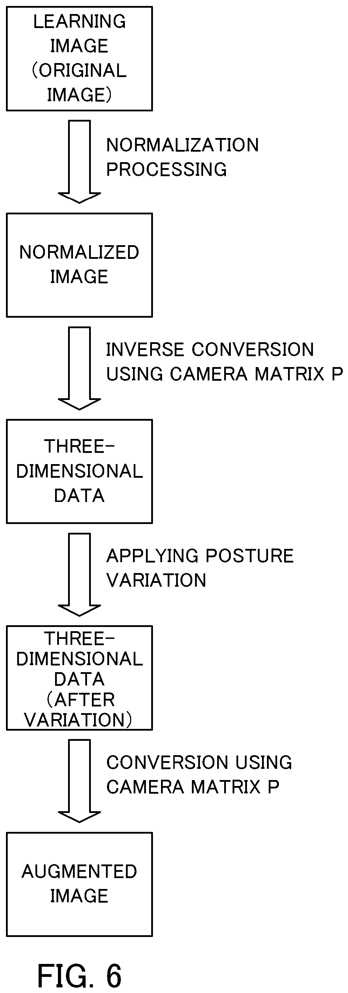

FIG. 6 illustrates a procedure for generating an augmented image.

The learning apparatus 100 performs normalization processing on an original learning image (original image) to generate a normalized image. Next, the learning apparatus 100 performs inverse conversion using the camera matrix P on the generated normalized image, thereby converting two-dimensional data of the normalized image into three-dimensional data. The learning apparatus 100 then applies posture variation to the converted three-dimensional data. As a result, three-dimensional variation is added to a subject of the original image in a state where the subject is placed in a three-dimensional space. Thereafter, the learning apparatus 100 converts the three-dimensional data after the variation into two-dimensional data by using the camera matrix P. In this manner, an augmented image is generated.

In general, in conversion from a two-dimensional image to a three-dimensional image, height in a z-axis direction becomes indeterminate. In addition, the external parameter matrix including r₁₁, r₁₂, ···, r₃₂, r₃₃, t₁, t₂, and t₃ is not determinable from a single captured image.

However, in non-contact biometric authentication such as palm vein authentication, an appropriate imaging distance (Z₀) from the biometric sensor 201 at the time of reading biometric information is preset for each biometric sensor 201. Accordingly, a captured image obtained by the biometric sensor 201 may be approximated as an image in which a distance from the biometric sensor 201 is Z₀ and a surface of a biological body part to be imaged is parallel to an imaging plane of the biometric sensor 201. In particular, a normalized image to which normalization processing is applied may be assumed to be an image in which the distance from the biometric sensor 201 is closer to Z₀ and the surface of the biological body part is substantially parallel to the imaging plane.

From this, the height in the z-axis direction is set to the above Z₀ indicating the appropriate distance from the biometric sensor 201 to the palm. The matrix elements t₁, t₂, and t₃ of the external parameter matrix are determined by the fixed value Z₀, and the matrix elements r₁₁, r₁₂, ···, r₃₂, and r₃₃ of the external parameter matrix become zero on the assumption that the surface of the palm is parallel to the imaging plane. Therefore, the learning apparatus 100 performs conversion into three-dimensional data from a single learning image as illustrated in FIG. 6, and three-dimensional posture variation of the palm is added by applying a matrix for posture variation to the three-dimensional data. The learning apparatus 100 then generates an augmented image including a palm to which three-dimensional posture variation is accurately added, by converting the three-dimensional data after the variation into two-dimensional data.

The units of fₓ, f_{y}, cₓ, c_{y}, r₁₁, r₁₂, ···, r₃₂, and r₃₃ described above are millimeters. Therefore, in order to obtain coordinates in pixel units on an image, an actual pixel size (mm) of an imaging element in the biometric sensor 201 is needed.

In FIGS. 4 to 6, for ease of explanation, it is assumed that a biometric image is input directly to the CNN 50 in the learning apparatus 100 and the authentication apparatus 200. In practice, however, feature extraction processing for detecting a vein pattern is executed on a normalized biometric image, and a feature image after the processing is input to the CNN 50.

Furthermore, generation of augmented images as described above is not limited to a case where palm veins are used as biometric information. The present technique is also applicable to other types of biometric information in which an appropriate distance from a biometric sensor to an authentication target site of a biological body is predetermined. Examples include iris authentication, non-contact fingerprint authentication in which a distance from a biometric sensor to a finger is kept constant by a physical guide or the like, and face authentication in which a position at which a person stands is specified or a size of a face imaged by the biometric sensor is guided to be constant.

Next, details of processing of the learning apparatus 100 will be described.

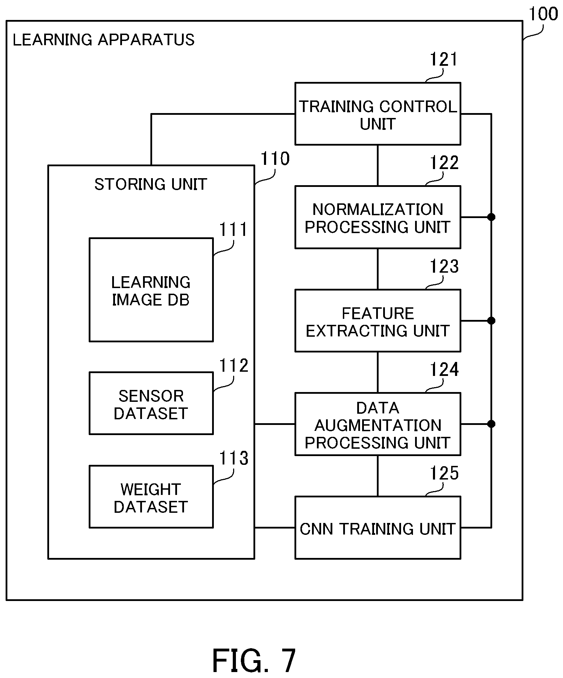

FIG. 7 illustrates an example of a configuration of processing functions included in the learning apparatus. The learning apparatus 100 includes a storing unit 110, a training control unit 121, a normalization processing unit 122, a feature extracting unit 123, a data augmentation processing unit 124, and a CNN training unit 125.

The storing unit 110 is a storage area secured in a storage device included in the learning apparatus 100, such as the RAM 102 and the HDD 103. A learning image database (DB) 111, a sensor dataset 112, and a weight dataset 113 are stored in the storing unit 110.

A plurality of learning images used for learning of the CNN 50 is registered in advance in the learning image database 111. Identification information (ID) for identifying a person who is an imaging target is added to each learning image. Information indicating specifications of the biometric sensor 201 used in the authentication apparatus 200 is registered in the sensor dataset 112. Weight coefficients between nodes included in the CNN 50 generated by training are registered in the weight dataset 113.

The processing of the training control unit 121, the normalization processing unit 122, the feature extracting unit 123, the data augmentation processing unit 124, and the CNN training unit 125 is implemented, for example, by the processor 101 executing a predetermined application program.

The training control unit 121 controls training processing of the CNN 50 in an integrated manner. The normalization processing unit 122 performs normalization processing on a learning image acquired from the learning image database 111, and outputs a normalized image. The feature extracting unit 123 performs feature extraction processing for extracting a vein pattern from the normalized image, and outputs a feature image.

The data augmentation processing unit 124 executes augmentation processing for augmenting an image (feature image) for training. The data augmentation processing unit 124 generates an augmented image in which a posture of a palm appearing in the feature image is varied three-dimensionally. The CNN training unit 125 executes training processing of the CNN 50 by using the original feature image before augmentation processing and the augmented image, and determines weight coefficients between nodes included in the CNN 50. The CNN 50 stores, in the storing unit 110, a dataset of the determined weight coefficients as the weight dataset 113.

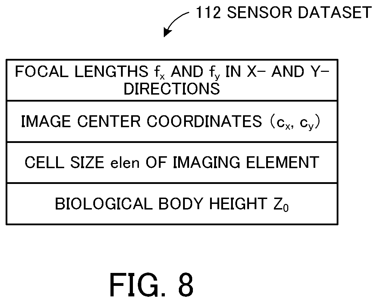

FIG. 8 illustrates an example of data included in the sensor dataset. In the sensor dataset 112, focal lengths fₓ and f_{y} in x- and y-directions of an imaging element of the biometric sensor 201, image center coordinates (cₓ, c_{y}) of the imaging element, a cell size elen of the imaging element, and a biological body height Z₀ are registered. The biological body height Z₀ indicates a height (appropriate distance) of a biological body part with respect to the biometric sensor 201. These parameters are determined in accordance with specifications of the biometric sensor 201. Units of these parameters are all millimeters.

Next, processing of the learning apparatus 100 will be described with reference to flowcharts.

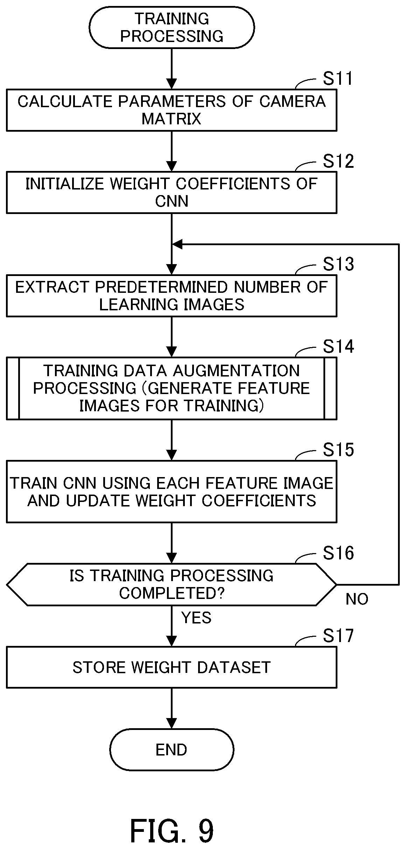

FIG. 9 is a flowchart illustrating an example of training processing.

[Step S11] The training control unit 121 reads the sensor dataset 112 from the storing unit 110, and calculates parameters of the camera matrix P on the basis of the sensor dataset 112.

[Step S12] The training control unit 121 initializes weight coefficients of the CNN 50. For example, initial values of the weight coefficients are set by random values.

[Step S13] The training control unit 121 extracts a predetermined number (for example, approximately sixteen) of learning images from the learning image database 111. In this processing, the predetermined number of learning images may be randomly extracted from among the learning images registered in the learning image database 111, or the learning images may be sequentially extracted in groups of the predetermined number.

[Step S14] Training data augmentation processing is executed. In this processing, a feature image for training of the CNN 50 is generated on the basis of each of the predetermined number of learning images that have been extracted.

[Step S15] The CNN training unit 125 executes training processing of the CNN 50 by using each generated feature image, and updates the weight coefficients of the CNN 50. In this processing, each feature image is used as training data, and machine learning is performed in which ID of a person associated with the learning image serving as the source of the feature image is used as ground truth data.

The CNN training unit 125 calculates a training loss when each feature image is input to the CNN 50. The training loss is a value indicating an error between a value calculated by the CNN 50 upon input of the feature image and the ground truth value. The CNN training unit 125 updates the weight coefficients of the CNN 50 by performing optimization calculation using an optimization algorithm on the basis of the calculated training loss. As the optimization algorithm, for example, stochastic gradient descent (SGD) or adaptive moment estimation (Adam) is used.

[Step S16] The training control unit 121 determines whether to terminate the training processing. For example, when the processing of steps S13 through S15 has been executed a predetermined number of times, it is determined that the training processing is to be terminated. When the training processing is continued, the processing proceeds to step S13, and when the training processing is terminated, the processing proceeds to step S17.

[Step S17] The CNN training unit 125 stores, in the storing unit 110 as the weight dataset 113, the weight coefficients that are set in the CNN 50.

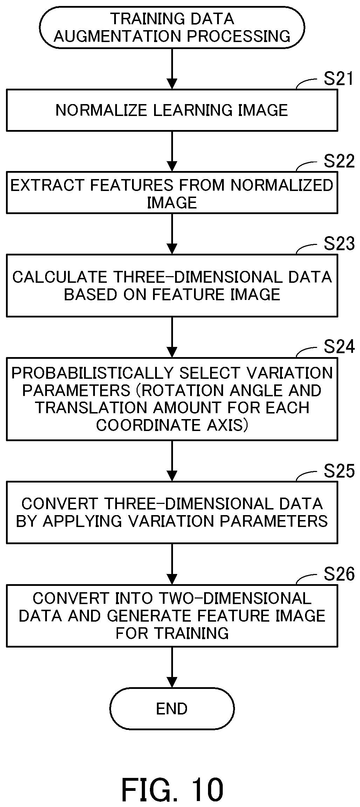

FIG. 10 is a flowchart illustrating an example of the training data augmentation processing. In step S14 of FIG. 9, the processing in FIG. 10 is executed for each of the learning images extracted in step S13.

[Step S21] The normalization processing unit 122 executes normalization processing on the learning image. As a result, the posture of the palm in the learning image is corrected such that the posture becomes approximately appropriate, and a normalized image is generated. Note that, in the normalization processing, processing for correcting the palm from a closed state to an opened state may also be executed.

[Step S22] The feature extracting unit 123 performs feature extraction processing for extracting a vein pattern from the normalized image, and generates a feature image. In this feature extraction processing, for example, vein-enhancement processing such as a band-pass filter is applied to the normalized image, and noise-reduction processing is further applied.

[Step S23] The data augmentation processing unit 124 converts two-dimensional data of the feature image into three-dimensional data, by using a matrix for inverse conversion of the conversion performed by the camera matrix P in which the parameters calculated in step S11 of FIG. 9 are set. As a result, coordinates of the vein pattern in the feature image are converted into coordinates in a three-dimensional space.

[Step S24] The data augmentation processing unit 124 probabilistically selects variation parameters for varying a posture and a position of the vein pattern in the three-dimensional space. Specifically, for each variation parameter, a predetermined probability is assigned to each value settable for that parameter, and one of the values is selected according to the assigned probabilities. As one example, the same probability is set for each of the settable values, and one of those values is selected with the same probability (that is, randomly).

In the processing of FIG. 10, as an example, not only the posture of the vein pattern is varied but also the position of the vein pattern is varied. As variation parameters for posture variation, rotation angles about each of an x-axis, a y-axis, and a z-axis are used. As variation parameters for position variation, translation amounts in each of an x-axis direction, a y-axis direction, and a z-axis direction are used.

In FIG. 10, as one example, predetermined discrete values are used as the rotation angles and translation amounts. As the discrete values corresponding to each variation parameter, zero, one or more positive values, and one or more negative values are included. Then, one of the discrete values is randomly selected for each variation parameter. Note that floating-point random values may be used as the rotation angles and translation amounts.

When zero is selected as all of the variation parameters, neither the posture nor the position is varied. In this case, in step S26 described later, the feature image generated in step S22 is output without modification. That is, in the processing of FIG. 10, there is a case where the original feature image is output, without modification, as a feature image for training of the CNN 50, and there is also a case where an augmented image, in which at least one of the posture and the position is varied with respect to the original feature image, is generated and output as the feature image for training of the CNN 50.

Note that, in selection of the variation parameters, the probability of zero being selected may be set larger than the probabilities of the other discrete values being selected, such that the original feature image is more likely to be output as the feature image for training than the augmented image.

[Step S25] The data augmentation processing unit 124 converts the three-dimensional data calculated in step S23 such that variation based on the variation parameters selected in step S25 is applied to the vein pattern.

[Step S26] The data augmentation processing unit 124 converts the three-dimensional data obtained in step S25 into two-dimensional data by using the camera matrix P in which the parameters calculated in step S11 of FIG. 9 are set. As a result, a feature image for training of the CNN 50 is generated.

Note that, when zero has been selected as all the variation parameters in step S24, the processing of step S25 and the conversion processing using the camera matrix P in step S26 may be skipped, and the feature image generated in step S22 may be output as the feature image for training without modification.

According to the processing of FIG. 10 described above, variation of posture and position in a three-dimensional space is applied to the vein pattern in the feature image, and a feature image including the varied vein pattern is generated as an augmented image. As a result, it becomes possible to generate an augmented image that accurately represents three-dimensional variation of a palm that occurs in practice. Then, the CNN 50 is trained using such augmented images as well, and the trained CNN 50 is used in authentication processing, whereby biometric authentication that is robust to variation in posture and position becomes possible, and authentication accuracy is improved.

The learning images registered in the learning image database 111 may be images that have already undergone normalization processing. In this case, the normalization processing unit 122 of the learning apparatus 100 is not needed, and the feature extracting unit 123 executes the feature extraction processing on the learning images (normalized images) extracted by the training control unit 121 from the learning image database 111. As a result, the processing load in training is reduced, and the training time of the CNN 50 is shortened.

Further, the learning images registered in the learning image database 111 may be feature images that have undergone normalization processing and feature extraction processing. In this case, the normalization processing unit 122 and the feature extracting unit 123 of the learning apparatus 100 are not needed, and the data augmentation processing unit 124 executes the data augmentation processing on the learning images (feature images) extracted from the learning image database 111.

Next, details of processing executed by the authentication apparatus 200 will be described. Thereby, the processing load in training is further reduced, and the training time of the CNN 50 is shortened.

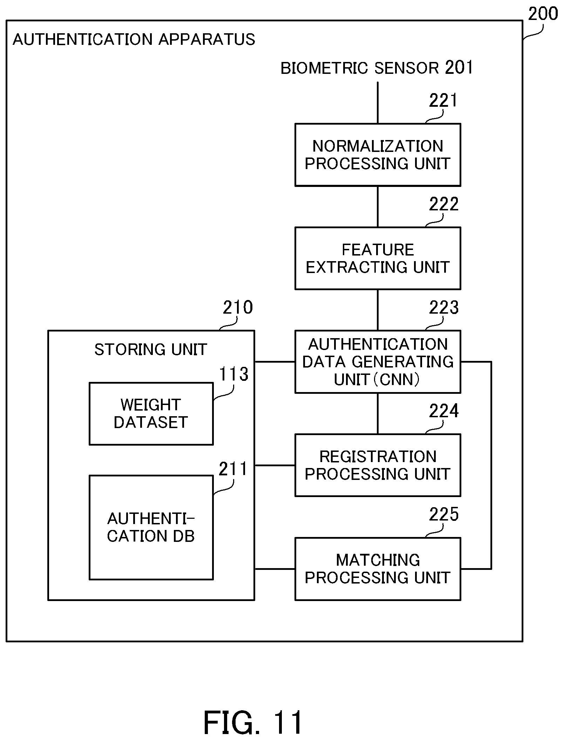

FIG. 11 illustrates an example of a configuration of processing functions included in the authentication apparatus. The authentication apparatus 200 includes a storing unit 210, a normalization processing unit 221, a feature extracting unit 222, an authentication data generating unit 223, a registration processing unit 224, and a matching processing unit 225.

The storing unit 210 is a storage area secured in a storage device (not illustrated) included in the authentication apparatus 200. The weight dataset 113 generated by the learning apparatus 100 is stored in the storing unit 210. In addition, an authentication database (DB) 211 is stored in the storing unit 210. In the authentication database 211, registration data corresponding to each user to be authenticated is registered in association with a user ID for identifying the user.

Processing of the normalization processing unit 221, the feature extracting unit 222, the authentication data generating unit 223, the registration processing unit 224, and the matching processing unit 225 is implemented, for example, by a processor (not illustrated) included in the authentication apparatus 200 executing a predetermined firmware program.

The normalization processing unit 221 performs normalization processing on a biometric image captured by the biometric sensor 201, and outputs a normalized image. The feature extracting unit 222 performs feature extraction processing for extracting a vein pattern from the normalized image, and outputs a feature image. The authentication data generating unit 223 inputs the feature image to the CNN 50 configured using the weight dataset 113, and calculates a feature vector as authentication data.

The registration processing unit 224, at the time of registration processing, registers the calculated feature vector as registration data, together with a user ID, in the authentication database 211. The matching processing unit 225, at the time of authentication processing, compares the calculated feature vector serving as matching data with registration data in the authentication database 211, and outputs an authentication result. For example, when one-to-one authentication is performed, the matching processing unit 225 reads registration data corresponding to a designated user ID from the authentication database 211, and calculates a matching score indicating similarity between the read registration data and the matching data. When the calculated matching score is equal to or greater than a predetermined threshold value, the matching processing unit 225 outputs an authentication result indicating successful authentication.

Next, processing of the authentication apparatus 200 will be described with reference to flowcharts.

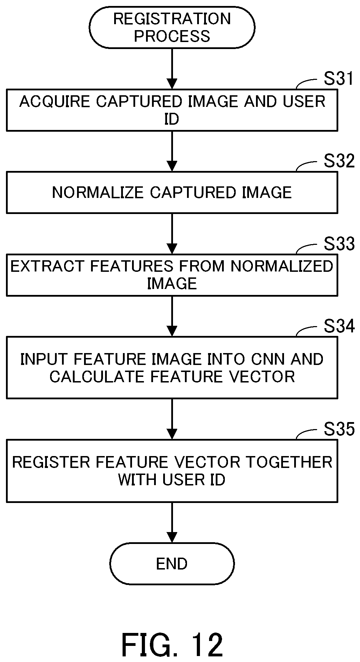

FIG. 12 is a flowchart illustrating an example of registration processing.

[Step S31] The normalization processing unit 221 acquires a captured image obtained by the biometric sensor 201 together with a user ID for identifying a user who is an imaging target.

[Step S32] The normalization processing unit 221 executes normalization processing on the captured image in the same manner as in step S21 of FIG. 10, and generates a normalized image.

[Step S33] The feature extracting unit 222 performs feature extraction processing for extracting a vein pattern from the normalized image in the same manner as in step S22 of FIG. 10, and generates a feature image.

[Step S34] The authentication data generating unit 223 inputs the feature image to the CNN 50 in which each weight coefficient of the weight dataset 113 is set, and calculates a feature vector.

[Step S35] The registration processing unit 224 registers the calculated feature vector, as registration data, in the authentication database 211 together with the user ID acquired in step S31.

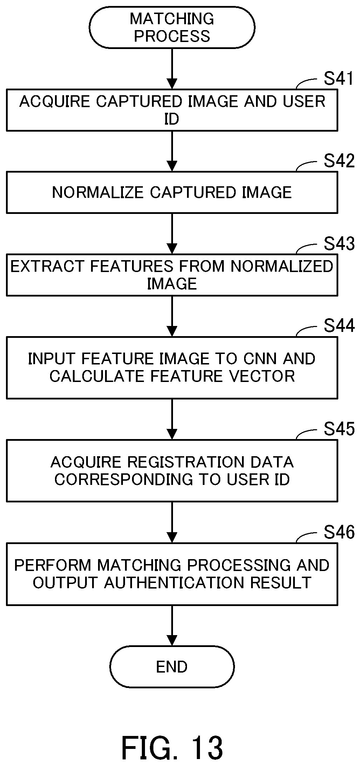

FIG. 13 is a flowchart illustrating an example of matching processing. In FIG. 13, as one example, it is assumed that one-to-one authentication is executed.

[Step S41] The normalization processing unit 221 acquires a captured image obtained by the biometric sensor 201 together with a user ID.

[Step S42] The normalization processing unit 221 executes normalization processing on the captured image in the same manner as in step S21 of FIG. 10, and generates a normalized image.

[Step S43] The feature extracting unit 222 executes feature extraction processing for extracting a vein pattern from the normalized image in the same manner as in step S22 of FIG. 10, and generates a feature image.

[Step S44] The authentication data generating unit 223 inputs the feature image to the CNN 50 in which each weight coefficient of the weight dataset 113 has been set, and calculates a feature vector.

[Step S45] The matching processing unit 225 reads, from the authentication database 211, registration data corresponding to the user ID acquired in step S41.

[Step S46] The matching processing unit 225 calculates a matching score indicating similarity between the registration data that has been read out and the feature vector (matching data) calculated in step S44. As the matching score, for example, a value inversely proportional to a distance between vectors of the registration data and the matching data, or a cosine similarity between the registration data and the matching data, is calculated. The matching processing unit 225 compares the calculated matching score with a predetermined threshold. When the matching score is equal to or greater than the threshold, the matching processing unit 225 outputs an authentication result indicating that authentication has succeeded, and when the matching score is less than the threshold, the matching processing unit 225 outputs an authentication result indicating that authentication has failed.

In the processing of FIGS. 12 and 13 described above, authentication data (feature vectors) is calculated by the CNN 50 that has been trained by the learning apparatus 100, using both original learning images and augmented images. As a result, biometric authentication that is robust to variations in posture and position of a palm with respect to the biometric sensor 201 becomes possible, and authentication accuracy is improved.

Note that, in step S24 of FIG. 10, as to the discrete values corresponding to each variation parameter, the same selection probability is set for the positive discrete values and the negative discrete values with respect to zero. However, for the translation amount in the z-axis direction among the variation parameters, these selection probabilities may be set in an asymmetric manner.

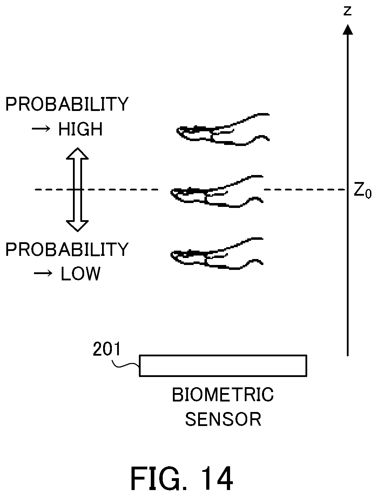

FIG. 14 illustrates probabilities of selecting discrete values for an amount of translation in the z-axis direction.

The value in the z-axis direction represents a distance from the biometric sensor 201 to a palm, which is a biological body part. As described above, there exists Z₀, which indicates an appropriate distance from the biometric sensor 201 to the palm. In a case where the palm is translated along the z-axis direction, when the distance to the palm is shorter than Z₀, a variation amount of the palm on an image becomes larger than when the distance is longer than Z₀. For example, even when the palm is rotated by the same angle in the same direction, the palm appears to be inclined to a greater extent on the image when the distance in the z-axis direction is smaller.

Accordingly, for the amount of translation in the z-axis direction, the data augmentation processing unit 124 may set a probability of setting of a discrete value greater than zero to be smaller than a setting probability of a discrete value less than zero, among settable discrete values. In this case, by probabilistically increasing the use of learning images in which apparent variation on the image is large and authentication is difficult, it becomes possible to generate learning images for the CNN 50 that enable improvement in authentication accuracy.

### Third Embodiment

In front of a CNN for image classification, a spatial transformer network (STN) having a posture correction function may be disposed. In such a case, the STN and the CNN are capable of being trained simultaneously. Therefore, as a third embodiment, an example is described in which an STN is disposed in front of the CNN 50 in the second embodiment.

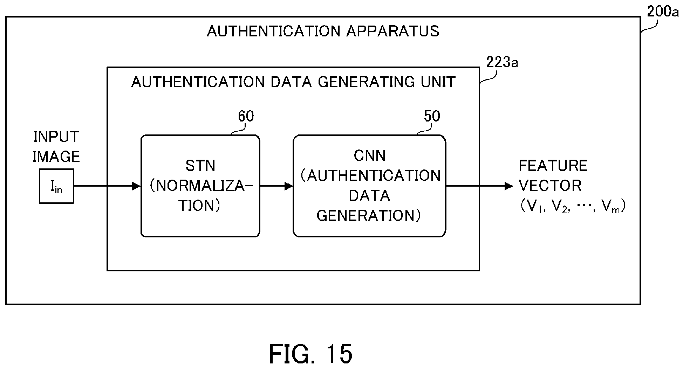

FIG. 15 illustrates an example of a configuration of an authentication data generating unit included in an authentication apparatus according to the third embodiment. An authentication apparatus 200a illustrated in FIG. 15 includes an authentication data generating unit 223a. In the authentication data generating unit 223a, an STN 60 is disposed in front of the CNN 50.

When an input image Iᵢₙ is input to the authentication data generating unit 223a, the STN 50 executes normalization processing for correcting posture to generate a normalized image, and the CNN 50 generates authentication data (feature vector) based on the normalized image. That is, the STN 60 realizes the same function as the normalization processing unit 221 in the second embodiment. In addition, the learning apparatus is capable of training the STN 60 and the CNN 50 simultaneously.

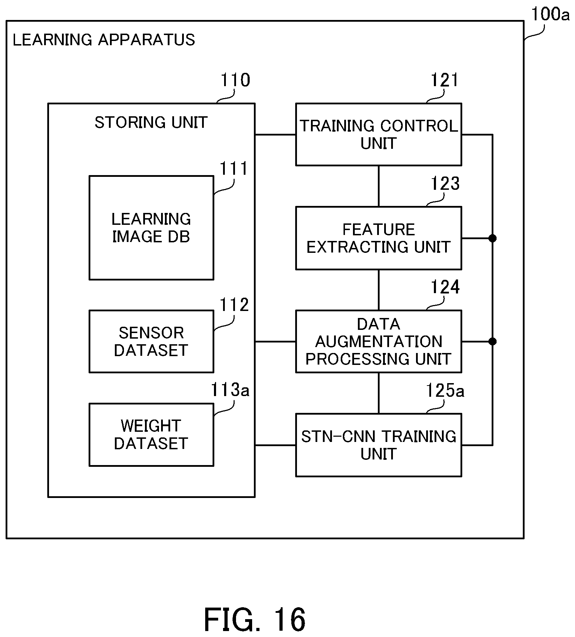

FIG. 16 illustrates an example of a configuration of processing functions of a learning apparatus according to the third embodiment. In FIG. 16, the same reference numerals are given to processing functions similar to those in FIG. 7. A learning apparatus 100a according to the third embodiment includes the storing unit 110, the training control unit 121, the feature extracting unit 123, the data augmentation processing unit 124, and an STN-CNN training unit 125a.

The storing unit 110 stores the learning image database 111, the sensor dataset 112, and a weight dataset 113a. The weight dataset 113a includes weight coefficients included in the trained STN 60 and CNN 50.

The feature extracting unit 123 applies feature extraction processing for extracting a vein pattern, not to normalized images but to learning images acquired from the learning image database 111, and outputs feature images to the data augmentation processing unit 124.

Processing of the STN-CNN training unit 125a is realized by a processor included in the authentication apparatus 200a executing a predetermined application program. Under control of the training control unit 121, the STN-CNN training unit 125a trains both the STN 60 and the CNN 50 using feature images for training obtained by the data augmentation processing unit 124, and generates the weight dataset 113a.

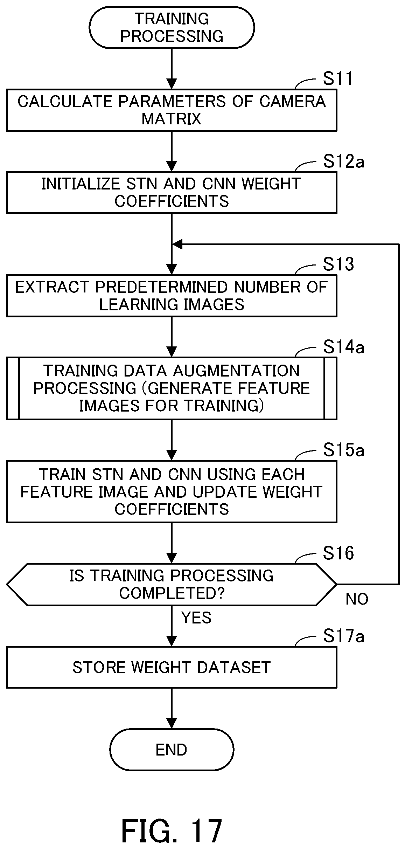

FIG. 17 is a flowchart illustrating an example of training processing. In the training processing illustrated in FIG. 17, steps S12a, S14a, S15a, and S17a are executed in place of steps S12, S14, S15, and S17 in the processing of FIG. 9, respectively.

[Step S12a] The training control unit 121 initializes weight coefficients of the STN 60 and the CNN 50. For example, initial values of the weight coefficients are set by random values.

[Step S14a] Training data augmentation processing is executed. In this processing, each feature image for training of the STN 60 and the CNN 50 is generated on the basis of each of the predetermined number of learning images that have been extracted. Further, this processing differs from step S14 of FIG. 9 in that augmented images are generated from feature images in a state where normalization is not performed.

[Step S15a] The STN-CNN training unit 125a executes training processing for the STN 60 and the CNN 50 by using each feature image generated in step S14a, and updates the weight coefficients of the STN 60 and the CNN 50. In this processing, similarly to step S15 of FIG. 9, each feature image is used as training data, and machine learning is performed in which ID of a person associated with the learning image serving as the source of the feature image is used as ground truth data.

[Step S17a] The STN-CNN training unit 125a stores, in the storing unit 110 as the weight dataset 113a, the weight coefficients that are set in the STN 60 and the CNN 50.

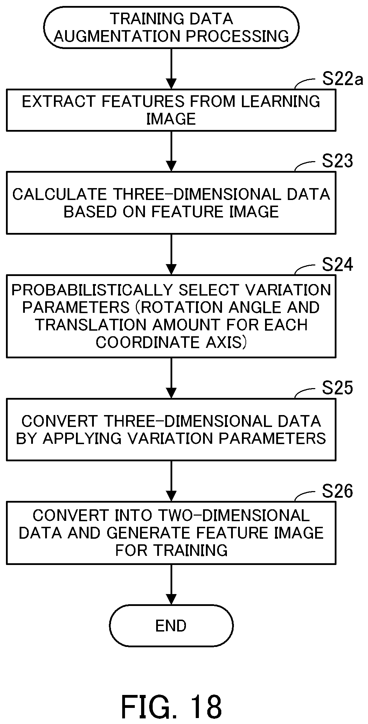

FIG. 18 is a flowchart illustrating an example of training data augmentation processing. In step S14a of FIG. 17, the processing in FIG. 18 is executed for each of the learning images extracted in step S13. In the training data augmentation processing illustrated in FIG. 18, step S22a is executed in place of steps S21 and S22 of FIG. 10.

[Step S22a] The feature extracting unit 123 performs feature extraction processing for extracting a vein pattern from the learning image, and generates a feature image. The feature extraction processing may be executed in accordance with a procedure similar to that of step S22 of FIG. 10.

Through the above processing, both the STN 60 and the CNN 50 are trained, and the weight dataset 113a is generated as a result of training. The weight dataset 113a is transferred to the authentication apparatus 200a via, for example, a network or a portable recording medium.

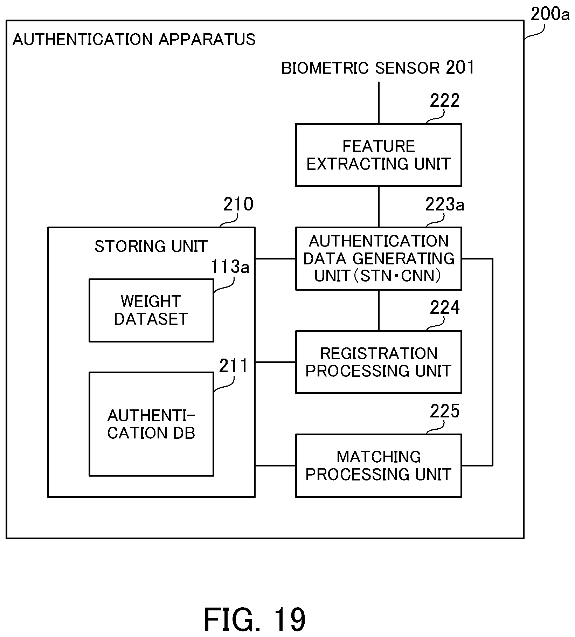

FIG. 19 illustrates an example of a configuration of processing functions included in an authentication apparatus according to the third embodiment. In FIG. 19, the same reference numerals are used to denote the same processing functions as those illustrated in FIG. 11. The authentication apparatus 200a according to the third embodiment includes the storing unit 210, the feature extracting unit 222, an authentication data generating unit 223a, the registration processing unit 224, and the matching processing unit 225.

The authentication database 211 and the weight dataset 113a generated by the learning apparatus 100a are stored in the storing unit 210. The feature extracting unit 222 performs feature extraction processing for extracting a vein pattern not from a normalized image but from a biological image captured by the biometric sensor 201, and outputs a feature image to the authentication data generating unit 223a.

Processing of the authentication data generating unit 223a is implemented, for example, by a processor included in the authentication apparatus 200a executing a predetermined firmware program. The authentication data generating unit 223a inputs the feature image to the STN 60 formed using the weight dataset 113a, and normalizes the feature image. Further, the authentication data generating unit 223a inputs the normalized image to the CNN 50 formed using the weight dataset 113a, and calculates a feature vector as authentication data.

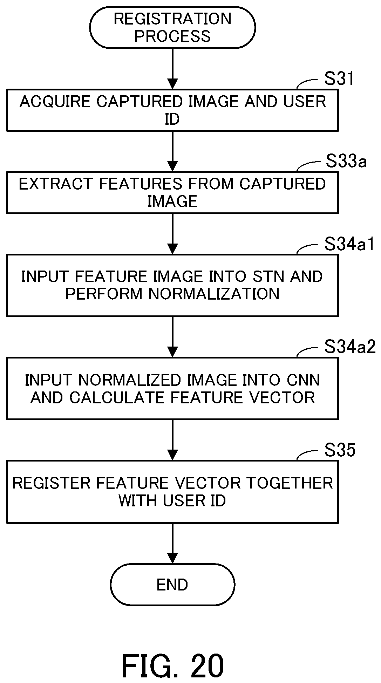

FIG. 20 is a flowchart illustrating an example of registration processing. In the registration processing illustrated in FIG. 20, steps S33a, S34a1, and S34a2 are executed in place of steps S32 to S34 in the processing of FIG. 12.

[Step S33a] The feature extracting unit 222 performs feature extraction processing for extracting a vein pattern from the captured image acquired in step S31, and generates a feature image.

[Step S34a1] The authentication data generating unit 223a inputs the feature image to the STN 60 in which weight coefficients for the STN 60 included in the weight dataset 113a are set, normalizes the feature image, and generates a normalized image.

[Step S34a2] The authentication data generating unit 223a inputs the normalized image to the CNN 50 in which weight coefficients for the CNN 50 included in the weight dataset 113a are set, and calculates a feature vector.

The calculated feature vector is input to the registration processing unit 224 and is registered, as registration data, in the authentication database 211 together with the user ID.

Although the illustration is omitted, in matching processing performed by the authentication apparatus 200a, a feature vector as matching data is calculated by processing similar to the processing from step S31 to step S34a2 of FIG. 20. Then, the matching data is matched with the registration data by the processing of step S45 of FIG. 13, and an authentication result is output.

According to the third embodiment described above, not only the CNN 50 but also the STN 60 are trained using learning images and augmented images. Accordingly, the normalization processing by the STN 60 is also optimized by augmented images obtained by applying three-dimensional variation to the learning images, thereby making it possible to generate the STN 60 that is capable of performing accurate normalization processing with respect to posture variations.

### Fourth Embodiment

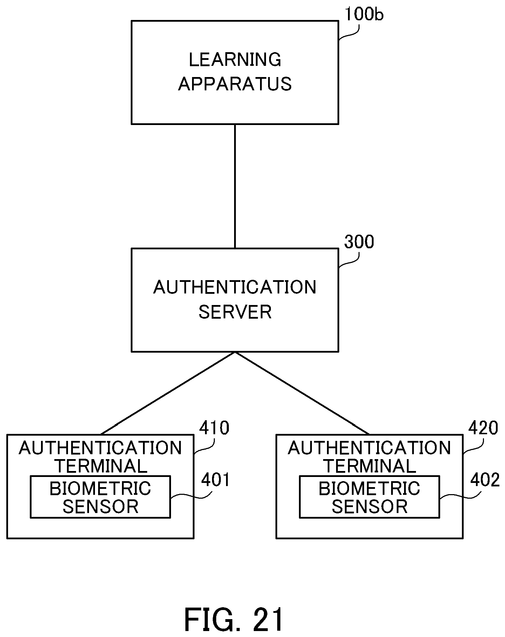

FIG. 21 illustrates an example of a configuration of a biometric authentication system according to a fourth embodiment. The biometric authentication system illustrated in FIG. 21 includes a learning apparatus 100b, an authentication server 300, and authentication terminals 410 and 420. Among these components, at least the authentication server 300 and the authentication terminals 410 and 420 are connected via a network.

In this biometric authentication system, the processing functions of the authentication apparatus 200 described above are implemented by the authentication server 300 and the authentication terminals 410 and 420, which are client devices, in a client-server manner. The authentication terminal 410 includes a biometric sensor 401, and a biometric image captured by the biometric sensor 401 is transmitted to the authentication server 300, and data registration processing and data matching processing are executed in the authentication server 300. Similarly, the authentication terminal 420 includes a biometric sensor 402, and a biometric image captured by the biometric sensor 402 is transmitted to the authentication server 300, and data registration processing and data matching processing are executed in the authentication server 300.

The authentication server 300 generates authentication data (feature vectors) by using the CNN 50, similarly to the authentication apparatus 200 described above. The learning apparatus 100b performs training processing of the CNN and transfers an obtained weight dataset to the authentication server 300.

Here, it is assumed that the specification of the biometric sensor 401 of the authentication terminal 410 differs from the specification of the biometric sensor 402 of the authentication terminal 420. In such a case, even when the same biological body part is captured in the same posture and at the same distance by both biometric sensors 401 and 402, the appearance of the biological body part in the captured images differs. Therefore, when the learning apparatus 100b generates augmented images for training of the CNN 50, it becomes appropriate to use camera matrices P that correspond to the sensor specifications for the biometric sensor 401 and the biometric sensor 402.

Accordingly, the learning apparatus 100b holds sensor datasets corresponding to the biometric sensors 401 and 402, respectively. The learning apparatus 100b generates augmented images by using the sensor dataset for the biometric sensor 401, and generates the CNN 50 for the biometric sensor 401 by using the original learning images and the augmented images. In addition, the learning apparatus 100b generates augmented images by using the sensor dataset for the biometric sensor 402, and generates the CNN 50 for the biometric sensor 402 by using the original learning images and the augmented images.

Then, the weight dataset of the CNN 50 for the biometric sensor 401 and the weight dataset of the CNN 50 for the biometric sensor 402 are transferred from the learning apparatus 100b to the authentication server 300. The authentication server 300 stores each weight dataset in association with a sensor ID for identifying the sensor type of the biometric sensors 401 and 402.

The authentication server 300 receives, from the authentication terminal 410, a captured image together with a sensor ID corresponding to the biometric sensor 401. The authentication server 300 forms the CNN 50 by using weight parameters associated with the received sensor ID, and generates authentication data by the CNN 50. Similarly, the authentication server 300 receives, from the authentication terminal 420, a captured image together with a sensor ID corresponding to the biometric sensor 402. The authentication server 300 forms the CNN 50 by using weight parameters associated with the received sensor ID, and generates authentication data by the CNN 50.

Through such processing, highly accurate biometric authentication becomes possible regardless of differences in specifications, by using biometric images captured by biometric sensors 401 and 402 having different specifications. For example, even when the same three-dimensional variation is applied to a biological body part, if the specifications of the biometric sensor that captures the biometric body part are different, the appearance of the biological body part after variation in the captured images also differs. As one example, when the focal lengths of the biometric sensors differ, the appearance such as the size of the biological body part in the captured images also differs. According to the training processing by the learning apparatus 100b described above, such differences in appearance according to differences in specifications of biometric sensors become reproducible through training. Therefore, by calculating authentication data using the CNN 50 trained for each biometric sensor specification, highly accurate authentication processing that is robust to three-dimensional variations of biological body parts is achieved.

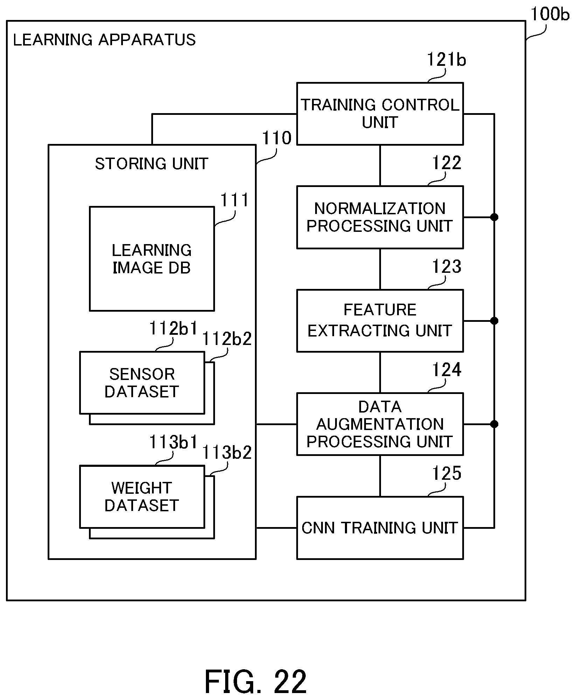

FIG. 22 illustrates an example of a configuration of processing functions included in the learning apparatus. In FIG. 22, the same reference numerals are assigned to processing functions similar to those in FIG. 7. The learning apparatus 100b includes the storing unit 110, a training control unit 121b, the normalization processing unit 122, the feature extracting unit 123, the data augmentation processing unit 124, and the CNN training unit 125. The processing of the training control unit 121b is implemented, for example, by a processor included in the learning apparatus 100b executing a predetermined application program.

The storing unit 110 stores the learning image database 111, sensor datasets 112b1 and 112b2, and weight datasets 113b1 and 113b2. The sensor dataset 112b1 is associated with a sensor ID of the biometric sensor 401, and camera parameters corresponding to the sensor type of the biometric sensor 401 are registered in advance. The sensor dataset 112b2 is associated with a sensor ID of the biometric sensor 402, and camera parameters corresponding to the sensor type of the biometric sensor 402 are registered in advance. The weight dataset 113b1 is associated with the sensor ID of the biometric sensor 401, and the weight dataset 113b2 is associated with the sensor ID of the biometric sensor 402.

In the learning apparatus 100b, under control of the training control unit 121b, the normalization processing unit 122, the feature extracting unit 123, the data augmentation processing unit 124, and the CNN training unit 125 generate weight datasets to be set in the CNN basically in the same procedure as in the second embodiment. However, the training control unit 121b designates a sensor ID to the data augmentation processing unit 124, and the data augmentation processing unit 124 generates the camera matrix P based on a sensor dataset corresponding to the designated sensor ID, and generates augmented images by using the camera matrix P. When a weight dataset of the CNN is generated by the training processing, the CNN training unit 125 stores the weight dataset in the storing unit 110 with the sensor ID associated with the weight dataset.

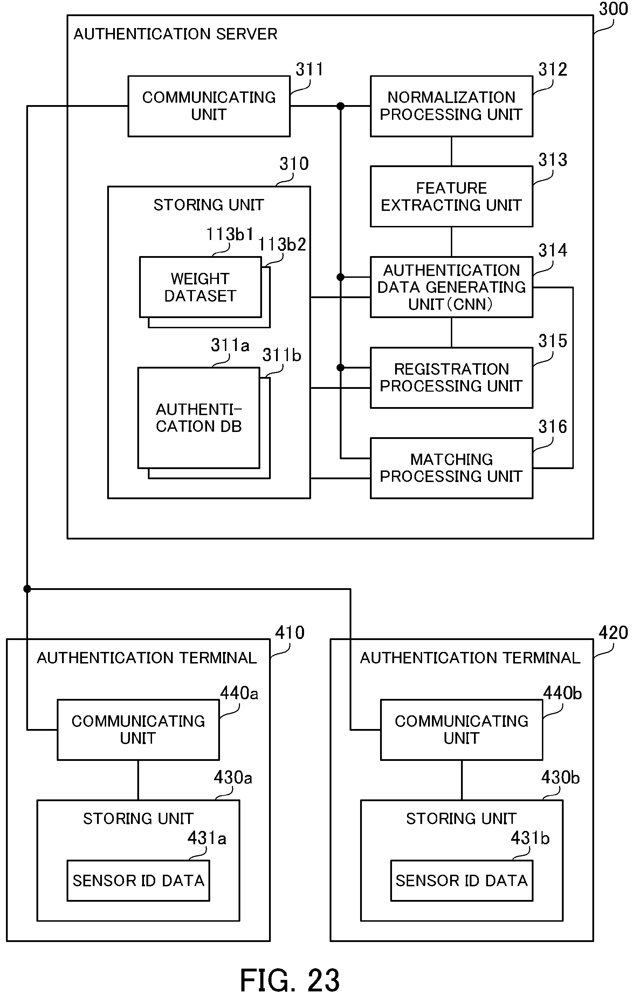

FIG. 23 illustrates an example of a configuration of processing functions included in the authentication server and the authentication clients.

First, the authentication terminal 410 includes a storing unit 430a and a communicating unit 440a. The storing unit 430a is a storage area secured in a storage device included in the authentication terminal 410. The storing unit 430a stores sensor ID data 431a in which a sensor ID of the biometric sensor 401 is described. The processing of the communicating unit 440a is implemented, for example, by a processor included in the authentication terminal 410 executing a predetermined firmware program. The communicating unit 440a transmits, at the time of data registration and at the time of authentication, a biometric image captured by the biometric sensor 401, a user ID, and the sensor ID described in the sensor ID data 431a, to the authentication server 300. In addition, the communicating unit 440a receives an authentication result from the authentication server 300 at the time of authentication, and outputs the authentication result via a display device or the like.

Similarly, the authentication terminal 420 includes a storing unit 430b and a communicating unit 440b. The storing unit 430b stores sensor ID data 431b in which a sensor ID of the biometric sensor 402 is described. The communicating unit 440b transmits, at the time of data registration and at the time of authentication, a biometric image captured by the biometric sensor 402, a user ID, and the sensor ID described in the sensor ID data 431b, to the authentication server 300. In addition, the communicating unit 440b receives an authentication result from the authentication server 300 at the time of authentication, and outputs the authentication result via a display device or the like.

The authentication server 300 includes a storing unit 310, a communicating unit 311, a normalization processing unit 312, a feature extracting unit 313, an authentication data generating unit 314, a registration processing unit 315, and a matching processing unit 316.

The storing unit 310 is a storage area secured in a storage device included in the authentication server 300. The storing unit 310 stores weight datasets 113b1 and 113b2 generated by the learning apparatus 100b, and authentication databases (DBs) 311a and 311b. The authentication database 311a is associated with a sensor ID of the biometric sensor 401, and the authentication database 311b is associated with a sensor ID of the biometric sensor 402.

The processing of the communicating unit 311, the normalization processing unit 312, the feature extracting unit 313, the authentication data generating unit 314, the registration processing unit 315, and the matching processing unit 316 is implemented, for example, by a processor included in the authentication server 300 executing a predetermined application program.

The communicating unit 311 receives, at the time of data registration and at the time of authentication, biometric images, user IDs, and sensor IDs from the authentication terminals 410 and 420. In addition, the communicating unit 311 transmits authentication results to the authentication terminals 410 and 420 at the time of authentication.

The normalization processing unit 312, the feature extracting unit 313, the authentication data generating unit 314, the registration processing unit 315, and the matching processing unit 316 basically execute processing similar to that of the normalization processing unit 221, the feature extracting unit 222, the authentication data generating unit 223, the registration processing unit 224, and the matching processing unit 225 in FIG. 11, respectively. However, the authentication data generating unit 314 forms the CNN 50 using a weight dataset corresponding to the sensor ID received by the communicating unit 311, and calculates authentication data (feature vectors) by using the CNN 50. The registration processing unit 315 registers registration data in an authentication database corresponding to the sensor ID. The matching processing unit 316 extracts registration data from an authentication database corresponding to the sensor ID, matches the extracted registration data with matching data, and transmits an authentication result to the communicating unit 311.

The normalization processing unit 312 may be mounted in the authentication terminals 410 and 420. In this case, normalized images are transmitted from the authentication terminals 410 and 420 to the authentication server 300 together with user IDs and sensor IDs. In addition, the normalization processing unit 312 and the feature extracting unit 313 may be mounted in the authentication terminals 410 and 420. In this case, feature images are transmitted from the authentication terminals 410 and 420 to the authentication server 300 together with user IDs and sensor IDs.

Further, the normalization processing unit 312, the feature extracting unit 313, and the authentication data generating unit 314 may be mounted in the authentication terminals 410 and 420. In this case, the weight dataset 113b1 is stored in the storing unit 430a of the authentication terminal 410, and the authentication data generating unit 314 of the authentication terminal 410 calculates authentication data (feature vectors) by using the CNN 50 formed by using the weight dataset 113b1. The communicating unit 440a of the authentication terminal 410 transmits the calculated authentication data to the authentication server 300 together with a user ID and a sensor ID.

In addition, the weight dataset 113b2 is stored in the storing unit 430b of the authentication terminal 420, and the authentication data generating unit 314 of the authentication terminal 420 calculates authentication data (feature vectors) by using the CNN 50 formed by using the weight dataset 113b2. The communicating unit 440b of the authentication terminal 420 transmits the calculated authentication data to the authentication server 300 together with a user ID and a sensor ID.

The processing functions of the apparatuses described in the embodiments above (for example, the learning apparatuses 10, 100, 100a, and 100b, the authentication apparatuses 200 and 200a, the authentication server 300, and the authentication terminals 410 and 420) are implementable by a computer. In this case, a program describing processing contents of the functions to be included in each apparatus is provided, and by executing the program by a computer, the processing functions described above are implemented on the computer. The program describing the processing contents is recordable on a computer-readable recording medium. Examples of the computer-readable recording medium include magnetic storage devices, optical discs, and semiconductor memories. Examples of the magnetic storage devices include hard disk drives (HDDs) and magnetic tapes. Examples of the optical discs include compact discs (CDs), digital versatile discs (DVDs), and Blu-ray discs (BDs, registered trademark).

When the program is distributed, for example, a portable recording medium such as a DVD or a CD on which the program is recorded is sold. In addition, the program may be stored in a storage device of a server computer and transferred from the server computer to another computer via a network.

A computer that executes the program stores, in its own storage device, the program recorded on the portable recording medium or the program transferred from the server computer. Then, the computer reads the program from its own storage device and executes processing according to the program. The computer may also directly read the program from the portable recording medium and execute processing according to the program. In addition, the computer may sequentially execute processing according to a received program each time the program is transferred from a server computer connected via a network.

The above description merely illustrates principles of the present invention. In addition, many modifications and variations are possible for those skilled in the art, and the present invention is not limited to the exact configurations and application examples illustrated and described above. All corresponding modifications and equivalents are regarded as falling within the scope of the present invention as defined by the appended claims and equivalents thereof.

### Reference Signs List

1 neural network
2-1 to 2-n, 2-1a learning image
3a, 3b three-dimensional data
4 biological body part
10 learning apparatus
11 storing unit
12 processing unit
13 internal parameters

## Claims

1. A learning program that causes a computer to execute a process comprising:
converting a first learning image, which is for machine learning of a neural network configured to calculate authentication data for biometric authentication from an input biometric image, into first three-dimensional data by using a first conversion expression based on an internal parameter of an imaging apparatus for capturing the biometric image;
generating second three-dimensional data by varying a posture of a biological body part included in the first three-dimensional data;
generating a second learning image by converting the second three-dimensional data by using a second conversion expression that performs inverse conversion of conversion performed by using the first conversion expression; and
executing machine learning of the neural network by using at least the first learning image and the second learning image.

2. The learning program according to claim 1, wherein the first conversion expression and the second conversion expression are generated based on the internal parameter and a predetermined distance from the imaging apparatus to the biological body part to be imaged.

3. The learning program according to claim 1, wherein an amount of variation of the posture of the biological body part included in the first three-dimensional data is determined probabilistically.

4. The learning program according to claim 1, wherein the generating of the second three-dimensional data includes, varying, by probabilistically setting a rotation angle and a translation amount in a three-dimensional space, at least one of the posture and a position of the biological body part included in the first three-dimensional data.

5. The learning program according to claim 4, wherein the generating of the second three-dimensional data includes setting, as a setting probability of the translation amount in a z-axis direction, a probability of translation in a negative direction higher than a probability of translation in a positive direction.

6. The learning program according to claim 1, wherein the converting of the first learning image into the first three-dimensional data includes executing normalization processing on the first learning image to correct the posture of the biological body part on the first learning image to a predetermined posture, thereby generating a normalized image, and converting the normalized image into the first three-dimensional data by using the first conversion expression.

7. The learning program according to claim 1, wherein the executing of the machine learning of the neural network includes executing machine learning of a spatial transformer network (STN) together with the executing of the machine learning of the neural network, the spatial transformer network being disposed in front of the neural network and configured to correct the posture of the biological body part on the input biological image.

8. The learning program according to claim 1, wherein:
identification numbers for identifying imaging target persons are associated with respective ones of a plurality of learning images including the first learning image,
the executing of the machine learning of the neural network includes generating a classifier for classifying the imaging target persons by executing the machine learning using the plurality of learning images and the second learning image as training data and using the identification numbers as ground truth data, and using, as an identification number associated with the second learning image, the same identification number associated with the first learning image, and
the neural network, in biometric authentication processing, calculates, as the authentication data, a feature vector output from an intermediate layer included in the neural network upon receiving the biometric image.

9. A learning method executed by a computer, the learning method comprising:
converting a first learning image, which is for machine learning of a neural network configured to calculate authentication data for biometric authentication from an input biometric image, into first three-dimensional data by using a first conversion expression based on an internal parameter of an imaging apparatus for capturing the biometric image;
generating second three-dimensional data by varying a posture of a biological body part included in the first three-dimensional data;
generating a second learning image by converting the second three-dimensional data by using a second conversion expression that performs inverse conversion of conversion performed by using the first conversion expression; and
executing machine learning of the neural network by using at least the first learning image and the second learning image.

10. A learning apparatus comprising:
a processing unit for:
converting a first learning image, which is for machine learning of a neural network configured to calculate authentication data for biometric authentication from an input biometric image, into first three-dimensional data by using a first conversion expression based on an internal parameter of an imaging apparatus for capturing the biometric image,
generating second three-dimensional data by varying a posture of a biological body part included in the first three-dimensional data,
generating a second learning image by converting the second three-dimensional data by using a second conversion expression that performs inverse conversion of conversion performed by using the first conversion expression, and
executing machine learning of the neural network by using at least the first learning image and the second learning image.
